(19) Europäisches Patentamt
European Patent Office
Office européen des brevets

(11) **EP 2 632 162 A1**

(12) **EUROPEAN PATENT APPLICATION**

(43) Date of publication:
**28.08.2013 Bulletin 2013/35**

(51) Int Cl.:
*H04N 7/26* *(2006.01)*

(21) Application number: **12305225.0**

(22) Date of filing: **27.02.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Olivier, Yannick**
  **35235 THORIGNE FOUILLARD (FR)**

• **Touze, David**
  **35200 RENNES (FR)**
• **Bordes, Philippe**
  **35890 LAILLE (FR)**
• **Thoreau, Dominique**
  **35510 CESSON SEVIGNE (FR)**

(74) Representative: **Rittner, Karsten et al**
**Deutsche Thomson-Brandt GmbH**
**Karl-Wiechert-Allee 74**
**30625 Hannover (DE)**

(54) **Method and device for encoding an HDR video image, method and device for decoding an HDR video image**

(57) The invention is made in the field of HDR video image encoding and decoding.

A method for encoding an HDR video image of high dynamic range using LDR video images is described. The LDR video images provide differently exposed lower dynamic range depictions of the HDR video content and wherein the LDR video images are encoded as different views of a multi-view coding scheme.

The method described comprises using processing means for selectively pre-processing, prior to encoding, one of the LDR video images according to a parameterized pre-processing parameterized according to at least one parameter encoded in metadata.

This allows to better compensate for the effects of different exposures and enables efficient inter-exposure prediction.

Fig. 2

**Description**

TECHNICAL FIELD

The invention is made in the field of video image encoding and decoding for transmission or storage. More precisely, the invention is made in the field of encoding and decoding video images of high dynamic range.

BACKGROUND OF THE INVENTION

Videos are generally represented on a limited number of bits (for instance 8, 10, 12 or more bits), corresponding to a limited range of values to represent the luminance signal. Videos represented in such way are called videos of low dynamic range or, shortly, LDR videos. However the human visual system is able to perceive a wider range of luminance. The limited representation most often does not allow for reconstructing correctly small signal variations, in particular in extremely dark or bright video image areas i.e. areas of high or low luminance. The HDR (High Dynamic Range) format consists in significantly extending bit-depth of signal representation to integer representation with more bits e.g. 20 to 64 bits, or even to floating representation, in order to keep a high accuracy of the signal on its entire luminance range.

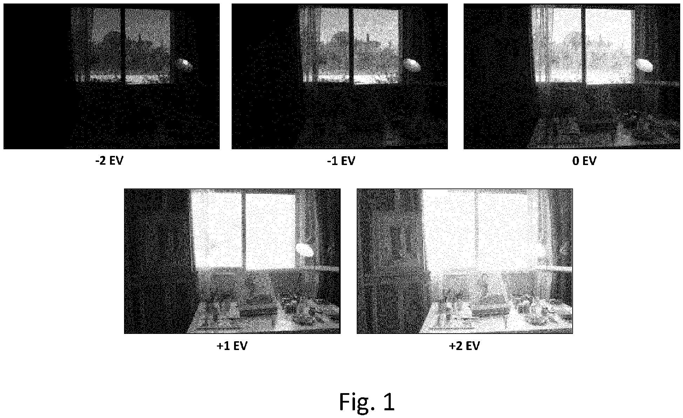

HDR images or videos can be captured in various ways. For instance, Digital Single Lens Reflex cameras can use bracketing technique to capture successive images of the same scene with different exposures wherein exposure is the total density of light allowed to fall on the imaging medium (photographic film or image sensor) during the process of taking an image. Those images of different exposures are represented as LDR images. Under-exposed images capture details in the bright areas whereas over-exposed images capture details in the dark areas, as exemplarily depicted in Fig. 1 for different exposure values EV.

In United States Patent Application 2008/0175494 it is described that, for high dynamic range video coding, a decoded LDR image may be processed by scaling and offsetting and that the decoded, processed LDR image may be used to create a residual HDR image by subtracting the decoded, processed LDR image from the original HDR image.

SUMMARY OF THE INVENTION

Creating an HDR residual using a scaled and offset LDR image is not without problems. The invention therefore proposes a method as claimed in claim 1 and a device as claimed in claim 2 for encoding an HDR video image of high dynamic range using LDR video images, the LDR video images providing differently exposed lower dynamic range depictions of the HDR video content and wherein the LDR video images are encoded as different views of a multi-view coding scheme (MVC) using weighted inter-view prediction.

Using one LDR image for weighted prediction of a further LDR image which together with the one LDR image allows for reconstructing the HDR image results in better compressible residuals than creating HDR video image residuals as known from prior art.

In an embodiment said method comprises using processing means for selectively pre-processing, prior to weighted inter-view prediction, one of the LDR video images according to a parameterized pre-processing parameterized according to at least one parameter encoded in metadata.

Selective parameterized pre-processing allows to better compensate for the effects of different exposures and thus enables efficient inter-exposure prediction.

The invention further proposes a corresponding method as claimed in claim 3 and a corresponding device as claimed in claim 4 for reconstructing an HDR video image of high dynamic range.

The features of further advantageous embodiments are specified in the dependent claims.

BRIEF DESCRIPTION OF THE DRAWINGS

Exemplary embodiments of the invention are illustrated in the drawings and are explained in more detail in the following description. The exemplary embodiments are explained only for elucidating the invention, but not for limiting the invention's disclosure or scope defined in the claims.

In the figures:

Fig. 1 depicts exemplary images of same content captured with different exposures;

Fig. 2 depicts a first exemplary embodiment of the proposed encoding/decoding scheme;

Fig. 3 depicts a second exemplary embodiment of the proposed encoding/decoding scheme; and

Fig. 4 depicts a detail of multi-view encoding/decoding as comprised in the second exemplary embodiment.

EXEMPLARY EMBODIMENTS OF THE INVENTION

The invention may be realized on any electronic device comprising a processing device correspondingly adapted. For instance, the invention may be realized in a television, a mobile video phone, a personal computer, a digital still camera, a digital video camera or a navigation system.

Exemplary embodiments of the invention propose use of an optimized MVC weighted inter-view prediction for High dynamic range encoding using multi-exposed Low dynamic range views. It can be applied for storage and delivery of HDR content.

Multi-view video depicting a same scene from different view-points contains a large amount of inter-view statistical dependencies, since all cameras capture the same scene with differences in the captured content resulting only from different viewpoints. Therefore multi-view video coding (MVC) makes use of inter-view prediction.

Gürler et al.: Flexible transport of 3-D Video Over Networks, Proc. of the IEEE, Vol. 99, No. 4, April 2011, describes that in MVC, it is important to perform proper illumination compensation either by preprocessing or by weighted inter-view prediction within the coding loop.

In MVC standard, the process to predict view2 from reconstructed samples of *view1* is linear:

$$Pred_{view2}(x,y) = W_{view1} \times Rec_{view1}(x+dx,y+dy) + O_{view1} \qquad (1)$$

The WP parameters (Wview1, Oview1) are transmitted in the slice header and are constant for the whole slice.

Exemplary embodiments of the invention propose to use existing infrastructure to encode and distribute directly the two or more LDR videos with different exposures without process the fusion algorithm before encoding. For that MVC can be used to take advantage of the similarities between those two LDR videos.

Exemplary embodiments of the invention propose a method to improve the coding quality of an MVC encoder for encoding 2 views delivered by an HDR camera/LDR camera-pair producing 2 videos of the same scene with different exposure, one over-exposed and one under-exposed.

Differently exposed LDR video images, from which an HDR video image can be constructed, provide even larger amount of inter-view statistical dependencies than classical multi-view videos depicting a same scene from different view-points since not only the same scene is captured but it is captured from the same view-point. Differences in the captured content resulting only from different exposures.

But in contrast to differences in illumination, differences in exposure cannot be compensated easily by a transformation comprising offset and weight, only. Therefore weighted inter-view prediction as known from MVC standard is not optimal for compensating the difference of exposure between the views.

The inventors became aware of that problem.

Therefore, in an exemplary embodiment a parameterized processing of one of the views, e.g. the main view, is performed this processing making the relation between the views linear or at least less deviant from a linear one.

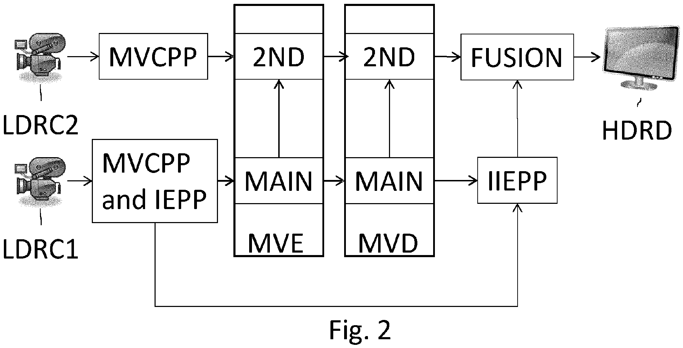

Fig. 2 depicts a first exemplary embodiment of the proposed encoding/decoding scheme.

Two exemplary LDR video cameras LDRC1, LDRC2 with aligned camera axes are capturing a same scene with different exposures. In the exemplary embodiment, the captured video images are pre-processed according to an MVC pre-processing MVCPP but this pre-processing is optional and not crucial for the invention.

One of the captured video images -exemplarily depicted as those captured by LDR video cameras LDRC1- are subject to a further parameter dependent pre-processing IEPP for compensating differences due to the different exposures.

Then the pre-processed video images are encoded in an MVC encoder MVE which can be a prior-art MVC encoder for instance. Video images of LDR video camera LDRC1 are encoded in a main view MAIN and video images of LDR video camera LDRC2 are inter-view residual encoded in a further view 2ND using weighted inter-view prediction on basis of the main view MAIN. In context of the current invention, this is also called inter-exposure prediction.

As one view has been processed in parameter dependent process IEPP before the MVC encoding process MVE, the parameters as set in the processing have to be transmitted for performing the inverse correction.

In an exemplary embodiment, one or more parameters of inter-exposure processing IEPP are adjusted at an image-by-image basis, i.e. determined individually per image. Other embodiments adjust parameters per slice or per group of pictures (GOP).

Inter-exposure processing IEPP can be realized, for example, by a mapping using a look-up table (LUT).

An MVC decoder MVD can then reconstruct the MVC pre-processed video images of LDR video camera LDRC2. In order to reconstruct MVC pre-processed video images of the main view, the reconstruction of content in the main view has to be subjected to an inverse inter-exposure pre-processing IIEPP in order to reconstruct the MVC pre-processed video images of LDR video camera LDRC1. Finally, the reconstructed video images of LDR video cameras LDRC1 and LDRC2 can be fused FUSION in order to generate HDR content displayable on an HDR Display HDRD.

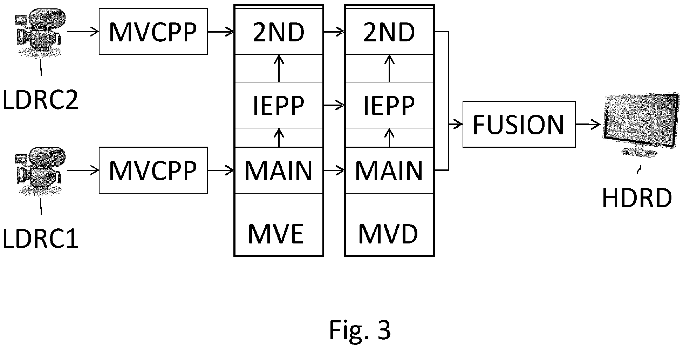

Fig. 3 depicts a second exemplary embodiment of the proposed encoding/decoding scheme.

Different to the first exemplary embodiment, the second exemplary embodiment comprises inter-exposure pre-processing IEPP as part of the inter-view prediction process in MVC encoding MVE as well as in MVC decoding MVD. Since the images encoded in main view MAIN are not processed, they have to be processed for prediction at decoder side the same way as they are processed for prediction at encoder side. That is same processing takes place at encoder and at decoder side in the second exemplary embodiment.

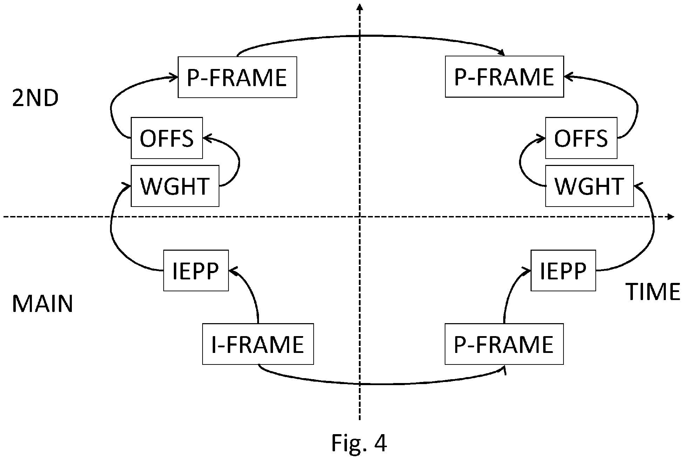

Fig. 4 depicts a detail of multi-view encoding/decoding as comprised in the second exemplary embodiment. An I-frame I-FRAME of the main view MAIN is used for intra-view prediction of a P-frame P-FRAME in the main view and for inter-view prediction of a further P-frame P-FRAME in the further view 2ND wherein inter-view prediction comprises an inter-exposure pre-processing IEPP weighting WGHT and offsetting OFFS. The P-frame P-FRAME in the main view MAIN and the a further P-frame P-FRAME in the further view 2ND are further used for prediction of a further P-frame P-FRAME in the further view. For prediction of said further P-frame P-FRAME in the further view 2ND, the P-frame P-FRAME in the main view MAIN is subjected to inter-exposure pre-processing IEPP and weighting WGHT and offsetting OFFS.

At encoder side, the parameters of inter-exposure pre-processing IEPP, e.g. the LUT, and the weighted prediction parameters ($W_{view1}$, $O_{view1}$) will be computed to minimize the error of inter-exposure pre-processed inter-view weighted prediction between the views. In other word, the principle is to minimize the following criterion per image, per slice or per GOP:

$$E\ (Y_{view2} - (\ W_{view1}\ \times\ LUT(Y_{view1})\ +\ O_{view1}\ )\ ) \hspace{3cm} (2)$$

In an exemplary embodiment of the invention, there is a method for encoding an HDR video image of high dynamic range. Said method makes use of LDR video images. Theses LDR video images provide differently exposed lower dynamic range depictions of the HDR video content. Said method comprises using processing means for pre-processing one of the LDR video images according to a parameterized pre-processing parameterized according to at least one parameter. Once preprocessed, the pre-processed LDR video image is encoded in a main view of a multi-view coding scheme (MVC) and reconstructed. Then the reconstructed LDR video image is used for weighted inter-view prediction of a different further one of the LDR video image and a residual of the prediction is encoded in a further view of the multi-view coding scheme (MVC). The at least one parameter is encoded in metadata of the multi-view coding scheme (MVC).

Corresponding thereto there is an exemplary embodiment of a method for reconstructing an HDR video image of high dynamic range. Said method comprising using processing means for decoding a post-processing parameter encoded in metadata of a multi-view coding scheme (MVC) and for reconstructing an encoded LDR video image encoded in a main view of the multi-view coding scheme (MVC). Then, it is used an inter-view weighted prediction determined using the reconstructed LDR video image for reconstructing a residual-encoded different further LDR video image encoded in a further view of the multi-view coding scheme (MVC). The reconstructed LDR video image is post-processed according to a parameterized pre-processing parameterized according to the decoded parameter and the HDR video image is reconstructed using the post-processed reconstructed LDR video image and the further reconstructed LDR video image.

In a further exemplary embodiment of the invention, there is a method for encoding an HDR video image of high dynamic range. Said method makes use of LDR video images. Theses LDR video images provide differently exposed lower dynamic range depictions of the HDR video content. Said method comprises encoding one of the LDR images in a main view of a multi-view coding scheme (MVC) and for reconstructing the encoded LDR video image encoded in the main view. Then, the reconstructed main view LDR video image is processed according to a parameterized processing parameterized according to at least one parameter. Once processed, the processed LDR video image reconstruction is used for weighted inter-view prediction of a different further one of the LDR video image and a residual of the prediction is encoded in a further view of the multi-view coding scheme (MVC). The at least one parameter is encoded in metadata of the multi-view coding scheme (MVC).

Corresponding thereto there is an further exemplary embodiment of a method for reconstructing an HDR video image of high dynamic range. Said method comprising using processing means for decoding a processing parameter encoded in metadata of a multi-view coding scheme (MVC) and for reconstructing an encoded LDR video image encoded in a main view of the multi-view coding scheme (MVC). The reconstructed main view LDR video image is processed using a parameterized processing parameterized according to the processing parameter. Then it is used an inter-view weighted prediction determined using the processed LDR video image reconstruction for reconstructing a residual-encoded different further LDR video image encoded in a further view of the multi-view coding scheme (MVC). The HDR video image is reconstructed using the reconstructed LDR video image and the further reconstructed LDR video image.

**Claims**

1. Method for encoding an HDR video image of high dynamic range using LDR video images of low dynamic range, the LDR video images providing differently exposed lower dynamic range depictions of the HDR video image content and the LDR video images allowing for reconstructing the HDR video image the method comprising

   • encoding the LDR video images as different views of a multi-view coding scheme (MVC) using weighted inter-view prediction wherein
   • at least one of the LDR video images used as reference for prediction is processed according to a parameterized processing, the method further comprising encoding, in metadata, at least one parameter of the processing.

2. Device for encoding an HDR video image of high dynamic range using LDR video images of low dynamic range, the LDR video images providing differently exposed lower dynamic range depictions of the HDR video content and the LDR video images allowing for reconstructing the HDR video image the device comprising

   • means for encoding the LDR video images as different views according to a multi-view coding scheme (MVC) using weighted inter-view prediction using at least one of the LDR video images as reference wherein
   • at least one of the LDR video images used as reference for prediction is processed according to a parameterized processing, the device further comprising means for encoding, in metadata, at least one parameter of the processing.

3. Method of claim 1 or device of claim 2, wherein the at least one LDR video image is processed prior to being encoded.

4. Method of claim 1 or device of claim 2, wherein the at least one LDR video image is processed after being encoded and reconstructed.

5. Method for reconstructing an HDR video image of high dynamic range, the method comprising

   • reconstructing LDR video images encoded as different views of a multi-view coding scheme (MVC) using weighted inter-view prediction wherein
   • a reconstruction of at least one of the LDR video images used as reference for prediction is processed according to a parameterized processing prior to being used for reconstructing the HDR video image, the method further comprising decoding, from metadata, at least one parameter of the processing.

6. Device for reconstructing an HDR video image of high dynamic range, the device comprising

   • means for reconstructing LDR video images encoded as different views of a multi-view coding scheme (MVC) using weighted inter-view prediction wherein
   • a reconstruction of at least one of the LDR video images used as reference for prediction is processed according to a parameterized processing prior to being used for reconstructing the HDR video image, the device comprising means for decoding, from metadata, at least one parameter of the processing.

7. Method of claim 5 or device of claim 6, wherein the reconstruction of the at least one of the LDR video images is processed prior to being used as reference for prediction.

8. Method of claim 5 or device of claim 6, wherein the unprocessed reconstruction of the at least one of the LDR video images is used as reference.

-2 EV     -1 EV     0 EV

+1 EV     +2 EV

Fig. 1

Fig. 2

Fig. 3

Fig. 4

Europäisches
Patentamt
European
Patent Office
Office européen
des brevets

# EUROPEAN SEARCH REPORT

Application Number

EP 12 30 5225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/183071 A1 (SEGALL CHRISTOPHER A [US] ET AL) 22 July 2010 (2010-07-22) * paragraphs [0137] - [0159] * ----- | 1-8 | INV. H04N7/26 |
| A | ALEJANDRO TROCCOLI ET AL: "Multi-View Multi-Exposure Stereo", 3D DATA PROCESSING, VISUALIZATION, AND TRANSMISSION, THIRD INTERNATION AL SYMPOSIUM ON, IEEE, PI, 1 June 2006 (2006-06-01), pages 861-868, XP031079026, ISBN: 978-0-7695-2825-0 * abstract * ----- | 1-8 | |
| A | WO 2012/004741 A1 (KONINKL PHILIPS ELECTRONICS NV [NL]; BRULS WILHELMUS HENDRIKUS ALFONSU) 12 January 2012 (2012-01-12) * page 18, line 20 - page 24, line 22 * * page 44, line 17 - page 46, line 10 * ----- | 1-8 | TECHNICAL FIELDS SEARCHED (IPC) H04N |
| A | WO 2011/005624 A1 (DOLBY LAB LICENSING CORP [US]; TOURAPIS ALEXANDROS [US]; PAHALAWATTA P) 13 January 2011 (2011-01-13) * paragraphs [0043] - [0054]; figure 12 * ----- | 1-8 | |

The present search report has been drawn up for all claims

| Place of search | Date of completion of the search | Examiner |
|---|---|---|
| Munich | 23 August 2012 | Montoneri, Fabio |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 12 30 5225

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2012

| Patent document cited in search report | | Publication date | Patent family member(s) | | Publication date |
|---|---|---|---|---|---|
| US 2010183071 | A1 | 22-07-2010 | CN | 102282838 A | 14-12-2011 |
| | | | EP | 2380344 A1 | 26-10-2011 |
| | | | JP | 2012515493 A | 05-07-2012 |
| | | | US | 2010183071 A1 | 22-07-2010 |
| | | | WO | 2010082692 A1 | 22-07-2010 |
| WO 2012004741 | A1 | 12-01-2012 | WO | 2012004709 A1 | 12-01-2012 |
| | | | WO | 2012004741 A1 | 12-01-2012 |
| WO 2011005624 | A1 | 13-01-2011 | US | 2012092452 A1 | 19-04-2012 |
| | | | WO | 2011005624 A1 | 13-01-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20080175494 A

**Non-patent literature cited in the description**

• **GÜRLER et al.** Flexible transport of 3-D Video Over Networks. *Proc. of the IEEE,* April 2011, vol. 99 (4